# EUROPÄISCHE PATENTSCHRIFT

(11) **EP 0 504 469 B1**
(45) Veröffentlichungstag und Bekanntmachung des Hinweises auf die Patenterteilung: **14.09.1994**
(21) Anmeldenummer: 91104575.5
(22) Anmeldetag: 22.03.1991
(51) Int. Cl.: H02K 5/22, H01R 4/24, H01R 4/64

(54) **Elektrische Kontaktverbindung**
Electric contact connection
Connexion à contact électrique

(43) Veröffentlichungstag der Anmeldung: 23.09.1992
(73) Patentinhaber: SIEMENS AKTIENGESELLSCHAFT, 80333 München (DE)
(72) Erfinder: Dölker, Hans-Dieter, W-8708 Gerbrunn (DE); Göb, Werner, Dipl.-Ing. (FH), W-8702 Kürnach (DE); Kunze, Peter, Dipl.-Ing. (FH), W-8710 Kitzingen (DE); Rohm, Hans, Dipl.-Ing. (FH), W-6973 Boxberg (DE); Schima, Ludwig, Dipl.-Ing. (FH), W-8702 Rottendorf (DE)

(56) Entgegenhaltungen:
- DE-B- 2 936 290
- FR-A- 2 184 848
- US-A- 2 515 105
- US-A- 3 021 581
- US-A- 3 435 126
- US-A- 3 551 713

## Beschreibung

Die Erfindung bezieht sich auf eine Kontaktverbindung gemäß Oberbegriff des Anspruchs 1; eine derartige Kontaktverbindung ist durch eine offenkundige Vorbenutzung in Anwendung auf einen Kraftfahrzeug-Ventilatorantrieb bekannt.

Im vorgenannten bekannten Fall werden als Speiseleitungen für den Antriebsmotor des Ventilators von der Kraftfahrzeug-Batterie je eine isolierte Minusleitung und eine isolierte Plusleitung zu einem am kommutatorseitigen Lagerbügel des Antriebsmotors als Leitungsstütze gehalterten Zwischenklemmbrett geführt; bei besonders langen Zuleitungen werden diese durch ein das Motorgehäuse mitumschlingendes Spannband zusätzlich lagefixiert. Von diesem Zwischenklemmbrett verlaufen neben je einer Verbindungsleitung für je einen der beiden Bürstenhalter von dem Minusleitungsanschluß eine mit ihrem einen Ende angelötete Kupferlitze, die über eine mit ihrem anderen Ende verbundene Öse mit einer Blechschraube elektrisch leitend mit einer Lagerbügelbohrung verschraubt ist. Die derart hergestellte Masseverbindung dient insbesondere dem zu einer vollkommenen Funkentstörung notwendigen Potentialausgleich zwischen der Masse der Kraftfahrzeug-Karosserie und den damit kontaktierten Bauteilen, wie z.B. dem Motorgehäuse des Antriebsmotors einerseits und der Minusleitung andererseits, deren batterieseitiger Anschlußpol eine Masseverbindung zu einem Kraftfahrzeug-Karosserieteil aufweist.

Durch die DE-C2-29 36 290 ist ein Schutzleiteranschluß für Motore mit einem in eine stirnseitige Öffnung des Statorblechpaketes des Motors eingelegten und form- und/oder kraftschlüssig festgeklemmten Schutzleiteranschlußteil bekannt, bei dem die Öffnung als dicht unterhalb der äußeren Umfangsfläche des Statorblechpaketes verlaufende Einsteckbohrung für ein zuvor abisoliertes Ende des Schutzleiters ausgebildet und das eingesteckte, zuvor abisolierte Ende durch ein außen am Statorblechpaket über der Einsteckbohrung angesetztes Verstemmwerkzeug festklemmbar ist.

Durch die US-A-3 435 126 ist ein Endanschluß für ein Erdkabel mit einer Vielzahl innerer Kupferleitungen, einem diese konzentrisch umgebenden Metallschild mit Korrosionsschutzüberzug und einem diesen wiederum konzentrisch umgebenden Isoliermantel bekannt, wobei zur Kontaktierung zwischen dem zum Freilegen der Kupferleitungsenden zurückgestülpten Metallschild und einem metallenen Kabelträger eine mit Krallen versehene Schelle mittels einer das Kabel an dem Kabelträger befestigten Kabelschelle derart an den Metallschild angedrückt wird, daß dessen außen liegender Korrosionsschutzüberzug durchstoßen wird.

Durch die US-A-2 515 105 ist eine elektrische Steckverbindung bekannt, bei der Steckerlaschen dadurch mit elektrisch isolierten Leitungen kontaktiert sind, daß die Laschen ösenartig mit ihren steckerabgewandten Enden jeweils um eine Leitung gebogen sind und dabei aus der Laschenfläche vorstehende Zähne durch die Isolierung bis zu der Leitung durchdringen.

Gemäß Aufgabe vorliegender Erfindung soll hinsichtlich Material- und Montageaufwand die Herstellung einer Masseverbindung zwischen dem Motorgehäuse des Antriebsmotors und einer Speiseleitung, vorzugsweise der Minusleitung, insbesondere unter Berücksichtigung einer Automatenfertigung, wesentlich vereinfacht werden.

Die Lösung dieser Aufgabe gelingt bei einer elektrischen Kontaktverbindung der eingangs genannten Art durch die Lehre des Anspruchs 1; vorteilhafte Ausgestaltungen der Erfindung sind jeweils Gegenstand der Unteransprüche.

Bei der erfindungsgemäßen Kontaktverbindung kann die zuvor mit einer die Isolation durchdringenden und mit der Litze elektrisch kontaktierenden Kontaktklemme versehene, durchgehend bis zum Bürstenhalter verlaufende Speiseleitung in eine zweckmäßigerweise gleichzeitig der Halterung am Motorgehäuse dienende und an diesem befestigte Halterungsklemme im Bereich der Kontaktklemme derart eingedrückt werden, daß ein Potentialausgleich von der Litze der Speiseleitung über die Kontaktklemme und die Halterungsklemme zum Motorgehäuse in einem Montagevorgang und unter Verzicht auf ein gesondertes Zwischenklemmbrett und eine gesonderte Masselitze und deren Verlötung und Verschraubung gewährleistet werden kann.

Zweckmäßigerweise ist eine doppel-U-förmige bzw. doppel-V-förmige Halterungsklemme mit axial in entgegengesetzten Richtungen geöffneten Schenkelpaaren vorgesehen, zwischen deren erstem Schenkelpaar der eine stirnseitige Randteil des Motorgehäuses und zwischen deren zweitem Schenkelpaar die Kontaktklemme mit der elektrischen Leitung axial einklemmbar ist; dadurch ist in montagetechnisch besonders einfacher Weise in nur axialer Handhabungsrichtung sowohl die Halterungsklemme am Motorgehäuse befestigbar als auch die Speiseleitung mit der Kontaktklemme in die am Motorgehäuse befestigte Halterungsklemme eindrückbar.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: eine axiale Draufsicht auf einen Ventilator-Antriebsmotor;
- FIG 2: eine Draufsicht auf die ventilatorradseitige Stirnseite des Antriebsmotors gemäß FIG 1;
- FIG 3: einen Teilschnitt gemäß Schnittverlauf III-III in FIG 2;
- FIG 4: einen Teilschnitt gemäß III-III in FIG 2, jedoch mit einer einteiligen Kontakt-Halterungsklemme;
- FIG 5: die radiale Draufsicht auf die einteilige Kontakt-Halterungsklemme gemäß FIG 4.

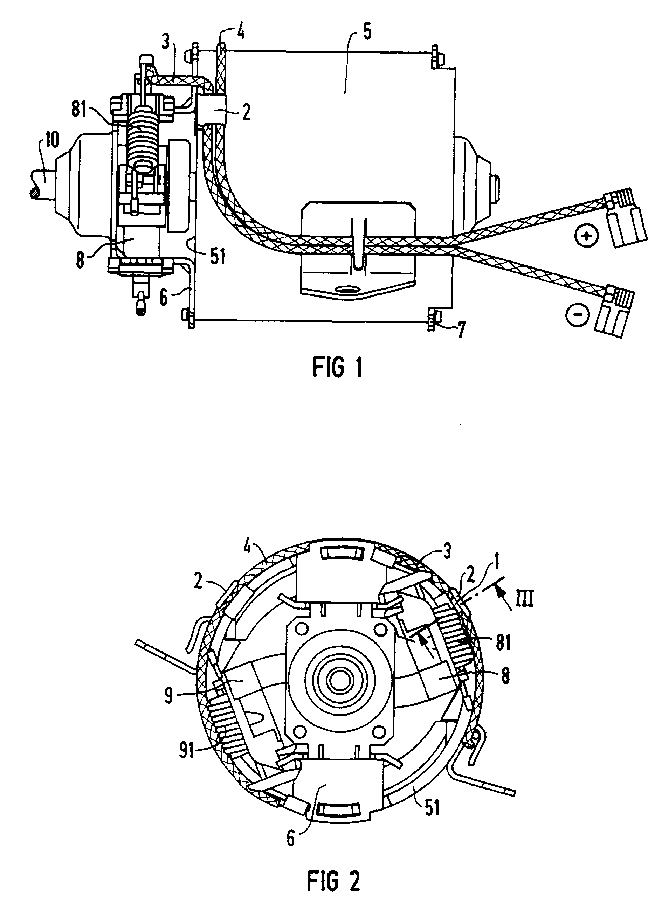

FIG 1, 2 zeigen als Antriebsmotor für ein Kraftfahrzeug-Heizungsgebläse einen Kommutatormotor mit einem Motorgehäuse 5 mit stirnseitigen Lagerbügeln 6;7 und darin gelagertem Rotor mit aus dem linken Lagerbügel 6 herausragendem Rotorwellenende 10, auf das in hier nicht näher dargestellter Weise ein Radialgebläse-Lüfterrad aufgedrückt wird. Als Speiseleitungen zu den beiden am linken Lagerbügel 6 schwenkbar gehaltenen Hammerbürstenhaltern 8,9 dienen zwei am Außenumfang des Motorgehäuses 5 festgelegte Speiseleitungen, von denen die Minusleitung 3 mit ihrem rechten Ende über eine Klemme an den Minuspol "-" einer Kraftfahrzeug-Batterie und mit ihrem linken Ende an den Eingangskontakt einer auf dem Rücken des Hammerbürstenhalters 8 gehaltenen und mit ihrem Ausgangskontakt an die Kohlebürste dieses Hammerbürstenhalters 8 führenden Entstördrossel 81 und von denen die Plusleitung 4 mit einer Klemme an ihrem rechten freien Ende an dem Pluspol "+" der Kraftfahrzeug-Batterie und mit ihrem linken Ende an den Eingangskontakt einer auf dem Rücken des Hammerbürstenhalters 9 gehaltenen und mit ihrem Ausgangskontakt an die Bürste dieses Hammerbürstenhalters angeschlossenen Entstördrossel 91 kontaktiert ist.

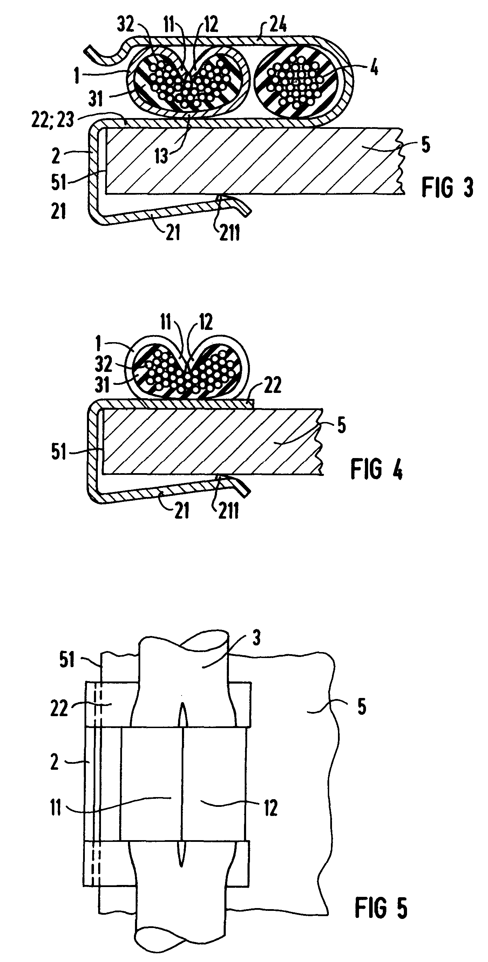

Zur Halterung der Minusleitung 3 und der Plusleitung 4 am linken stirnseitigen Ende des Motorgehäuses 5 dienen Halterungsklemmen 2 bzw.2, die - wie insbes. aus FIG 3 ersichtlich - doppel-U-förmig bzw. doppel-V-förmig derart ausgebildet sind, daß sie axial in entgegengesetzter Richtung geöffnete Schenkelpaare 21;22 bzw. 23;24 aufweisen, wobei zwischen dem ersten Schenkelpaar 21;22 der stirnseitige Randteil 51 des Motorgehäuses 5 und zwischen dem zweiten Schenkelpaar 23;24 eine oder mehrere Speiseleitungen axial einklemmbar sind.

Die in FIG 1 sichtbare Halterungsklemme 2 ist in montagetechnisch vorteilhafter Weise mit ihrem unteren Schenkelpaar axial auf den stirnseitigen Randteil 51 aufgeschoben und in ihr oberes Schenkelpaar sind zunächst die Plusleitung 4 und dann die Minusleitung 3 eingedrückt. Während die Minusleitung 3 nach Verlassen der in FIG 1 sichtbaren Halterungsklemme 2 direkt zum Eingangskontakt der Entstördrossel 81 geführt ist, verläuft die Plusleitung 4 tangential am Außenumfang des Motorgehäuses 5 bis zu dessen Rückseite, ist dort in eine weitere, insbes. aus FIG 2 ersichtliche, Halterungsklemme 2 festgelegt und führt dann zum Eingangskontakt der Entstördrossel 91.

Wie insbes. aus FIG 3 ersichtlich, dient zur erfindungsgemäß besonders einfachen elektrischen Massekontaktverbindung zwischen der Litze 32 der Minusleitung 3 und dem Motorgehäuse 5 eine Kontaktklemme 1, die durch Crimpen mit einem Rücken 13 den Außenumfang der Isolation 31 der Minusleitung 3 umfaßt und mit Spitzen 11;12 derart in die Isolation 31 eingedrückt ist, daß diese elektrisch leitend die innere Litze 32 kontaktieren. Der die Isolation 31 außen umfassende Rücken 13 der Kontaktklemme 1 ist seinerseits zwischen den Schenkeln 23;24 der Halterungsklemme 2 derart eingedrückt, daß auch eine elektrische Massekontaktverbindung zwischen der Kontaktklemme 1 und der Halterungsklemme 2 gewährleistet ist; da die Halterungsklemme 2 mit ihrem ersten Schenkelpaar 21;22 auf den stirnseitigen Randteil 51 des Motorgehäuses 5 aufgedrückt und zusätzlich über einen Krallhaken 241 relativ zur Innenumfangsfläche des Motorgehäuses 5 lagefixiert ist, besteht auf einfache Weise eine sichere Massekontaktverbindung zwischen der Kontaktklemme 1 und dem Motorgehäuse 5.

FIG 4,5 zeigen gemäß einer Ausgestaltung der Erfindung eine hinsichtlich Teile- als auch Montageaufwand noch weitere Reduzierungsmöglichkeit zur Herstellung einer Kontaktverbindung in Form einer einstückigen Kontakt-Halterungsklemme 1;2, wobei aus dem auf der Oberfläche des Motorgehäuses 5 aufliegenden Schenkel (22) des ersten Schenkelpaares 21;22 des Halterungsklemmenteils ein teilweise freigestanzter Kontaktklemmenteil mit der einzig aufgenommenen, mit einem Massekontakt zum Motorgehäuse zu versehenen Minusleitung 3 vercrimpbar abgebogen und mit seinen freien Spitzen 11;12 beidendseitig seines mit den Halterungsklemmenteils teilweise einstückigen Rückens 13 durch die Isolation 31 bis zum Kontakt mit der Litze 32 eingedrückt ist.

Es ist ersichtlich, daß durch die erfindungsgemäße elektrische Kontaktverbindung mit geringem teile- und montagemäßigen Aufwand ein Potentialausgleich zwischen der Minusleitung 3 und dem Motorgehäuse 5 gewährleistet ist, wobei auf die im bekannten Fall notwendigen Bauteile eines Zwischenklemmbrettes, einer zusätzlichen Litzenverbindung vom Zwischenklemmbrett zum Motorgehäuse und auf deren zusätzliche Verlötung am Zwischenklemmbrett bzw. Verschraubung am Motorgehäuse oder am Lagerbügel verzichtet werden kann.

## Patentansprüche

1. Kontaktverbindung zum Potentialausgleich für einen funkentstörten elektrischen Kraftfahrzeug-Motorhilfsantrieb zwichen einer von einer Isolation (31) umgebenden elektrischen Litze (32) einer Speiseleitung (Minus-Leitung 3) und einem diese halternden Motorstatorteil (Motorgehäuse 5), **dadurch gekennzeichnet**, daß die Speiseleitung (Minus-Leitung 3) in ihrem Verlauf entlang des Motorstatorteils (Motorgehäuse 5) an diesem durch eine Halterungsklemme (2) gehaltert und gleichzeitig über eine die Isolation (31) zumindest teilweise umfassende verformbare, durch die Isolation (31) bis zu der Litze (32) durchgedrückte und mit ihrer Außenfläche (Rücken 13) an den Motorstatorteil (Motorgehäuse 5) angedrückte Kontaktklemme (1) mit diesem elektrisch leitend verbunden ist.

2. Kontaktverbindung nach Anspruch 1, **dadurch gekennzeichnet**, daß die Kontaktklemme (1) in eine an dem Motorgehäuse (5) elektrisch leitend befestigte Halterungsklemme (2) eingedrückt ist.

3. Kontaktverbindung nach Anspruch 1 oder 2, **gekennzeichnet** durch eine doppel-U-förmige bzw. doppel-V-förmige Halterungsklemme (2) mit axial in entgegengesetzten Richtungen geöffneten Schenkelpaaren (21;22 bzw. 23;24), zwischen deren erstem Schenkelpaar (21;22) der eine stirnseitige Randteil (51) des Motorgehäuses (5) und zwischen deren zweitem Schenkelpaar (23;24) die Kontaktklemme (1) mit der Speiseleitung axial einklemmbar ist.

4. Kontaktverbindung für einen aus einer Batterie mit einer Masseverbindung ihres einen Pols (Minuspol) über eine Minusleitung (3) sowie eine Plusleitung (4) gespeisten Elektro-Antriebsmotor, insbesondere Ventilator-Antriebsmotor, nach einem der Ansprüche 1-3, **dadurch gekennzeichnet**, daß die Kontaktklemme (1) auf die Minusleitung (3) gepreßt und an der kommutatorseitigen Stirnseite (Randteil 51) des Motorgehäuses (5) über die Halterungsklemme (2) befestigt und mit dem Motorgehäuse (5) kontaktiert ist.

5. Kontaktverbindung nach einem der Ansprüche 1 - 4, **gekennzeichnet durch** eine Kontaktklemme (1) in Clip-Form mit beidendseitig ihres Rückens (13) beim Vercrimpen um die Speiseleitung (Minusleitung 3) durch deren Isolation (31) bis zu deren Litze (32) durchdrückbaren Spitzen (11;12).

6. Kontaktverbindung nach einem der Ansprüche 1 - 5, **gekennzeichnet** durch eine Halterungsklemme (2) mit zumindest einem an dem Motorgehäuse (5), vorzugsweise an dessen Innenumfangsfläche, fixierbarem Krallhaken (211) an zumindest einem Schenkel (21) des ersten Schenkelpaares (21;22).

7. Kontaktverbindung nach einem der Ansprüche 1 - 6, **gekennzeichnet** durch eine einstückige Kontakt-Halterungskemme (1,2) mit aus dem auf der Oberfläche des Motorgehäuses (5) aufliegenden Schenkel (22) des ersten Schenkelpaares (21;22) des Halterungsklemmenteils teilweise freigestanzten und als Clip mit der Speiseleitung (Minusleitung 3) vercrimpbaren Kontaktklemmenteil.

## Claims

1. A contact connection for equipotential bonding for an interference suppressing electric motor vehicle motor support drive between an electric strand (32), surrounded by an insulation (31), a supply lead (negative supply lead 3) and a motor stator part (motor housing 5), which supports the latter, characterized in that the supply lead (negative supply lead 3), is held on the motor stator part (motor housing 5), by a holding clip 2, as it extends along said motor stator part (motor housing 5) and is simultaneously connected electrically conductively with the latter by means of a ductile contact clip (1), which at least partially encompasses the insulation (31) and which is pressed through the insulation (31) to the strand (32) and which is pressed onto the motor stator part (motor housing 5), with its outer surface, (back part 13).

2. A contact connection according to claim 1, characterized in that the contact clip (1), is pressed into a holding clip (2), which is electrically, conductively secured on the motor housing (5).

3. A contact connection according to claim 1 or 2, characterized by a double U-shaped or double V-shaped holding clip (2), with axial limb pairs (21; 22 or 23; 24), opened in opposite directions between the first limb pair (21; 22) of which, the one end edge part (51), of the motor housing (5) is axially clamped and between the second limb pair (23;24) of which, the contact clip (1), with the supply lead, is axially clamped.

4. A contact connection for an electric drive motor, particularly fan drive motor, supplied by a battery with a chassis earth connection of one of its terminals (negative terminal), by means of a negative supply lead (3) and a positive supply lead (4), according to one of claims 1-3, characterized in that the contact clip (1) is pressed onto the negative supply lead (3) and is secured on the commutator end side (edge part 51), of the motor housing (5) by means of the holding clip (2) and contacts the motor housing (5).

5. A contact connection according to one of claims 1 to 4, characterized by a contact clip (1), in clip form with points (11; 12) on both sides of its back part (13), which, when crimped around the supply lead (negative supply lead 3), can be pressed through the insulation (31), of the supply lead to its strand (32).

6. A contact connection according to one of claims 1 to 5, characterized by a holding clip (2), with at least one claw hook (211), which can be fixed on the motor housing (5), preferably on the inner peripheral surface of the latter, on at least one limb (21), of the first limb pair (21; 22).

7. A contact connection according to one of claims 1 to 6, characterized by a single-piece contact holding clip (1, 2), with contact clip part partially freely punched from the limb (22), of the first limb pair (21; 22) of the holding clip part, said limb (22), lying on the surface of the motor housing (5); said contact clip part can be crimped as a clip with the supply lead (negative supply lead 3).

## Revendications

1. Liaison de contact pour réaliser une compensation de potentiel pour un système d'entraînement électrique auxiliaire antiparasité à moteur de véhicules automobiles, entre une tresse électrique (32), entourée par un isolant (31), d'un conducteur d'alimentation (conducteur négatif 3) et une partie formant stator du moteur (boîtier 5 du moteur), retenant cette tresse, caractérisée par le fait que le conducteur d'alimentation (conducteur négatif 3) est retenu, sur son étendue le long de la partie formant stator du moteur (boîtier 5 du moteur), sur cette partie formant stator au moyen d'un collier de fixation (2) et simultanément est relié, d'une manière électriquement conductrice, et par l'intermédiaire d'une borne de contact déformable (1) qui entoure au moins partiellement l'isolant (31), qui est enfoncée à travers l'isolant (31) jusqu'à la tresse (32) et qui est serrée, par sa surface extérieure (dos 13) contre la partie formant stator du moteur (boîtier 5 du moteur), à cette borne de contact.

2. Liaison de contact suivant la revendication 1, caractérisée par le fait que la borne de contact (1) est enfoncée dans un collier de fixation (2) fixé d'une manière électriquement conductrice au boîtier (5) du moteur.

3. Liaison de contact suivant la revendication 1 ou 2, caractérisée par un collier de fixation (2) en forme de U double ou en forme de V double comportant des couples de branches (21; 22 ou 23; 24), qui s'ouvrent axialement dans des directions opposées, une partie marginale frontale (51) du boîtier (5) du moteur pouvant être serrée axialement entre les branches du premier couple de branches (21; 22), tandis que la borne de contact (1) peut être serrée axialement, avec le conducteur d'alimentation, entre les branches du second couple de branches (23; 24).

4. Liaison de contact pour un moteur électrique d'entraînement, notamment un moteur d'entraînement de ventilateur, alimenté à partir d'une batterie au moyen d'une liaison à la masse de l'un de ses pôles (pôle négatif) par l'intermédiaire d'un conducteur négatif (3) ainsi que par l'intermédiaire d'un conducteur positif (4), suivant l'une des revendications 1-3, caractérisé par le fait que la borne de contact (1) est serrée sur le conducteur négatif (3) et est fixé à la face frontale (partie marginale 51), située du côté du collecteur, du boîtier (5) du moteur, par l'intermédiaire du collier de fixation (2) et établit un contact avec le boîtier (5) du moteur.

5. Liaison de contact suivant l'une des revendications 1-4, caractérisée par une borne de contact (1) réalisée sous la forme d'un clip comportant des pointes (11; 12), qui peuvent être enfoncées, des deux côtés du dos (13) de la borne, lors du sertissage, autour du conducteur d'alimentation (conducteur négatif 3), à travers l'isolant (31) de ce conducteur jusqu'à atteindre la tresse (32) du conducteur.

6. Liaison de contact suivant l'une des revendications 1-5, caractérisée par un collier de fixation (2) comportant au moins un crochet à griffe (211) pouvant être fixé sur le boîtier (5) du moteur, de préférence sur sa surface circonférentielle intérieure, au niveau d'au moins une branche (21) du premier couple de branches (21; 22).

7. Liaison de contact suivant l'une des revendications 1-6, caractérisée par un collier de fixation à contact d'un seul tenant (1, 2) comportant une partie formant borne de contact, qui est découpée partiellement à partir de la branche (22), qui s'applique sur la surface du boîtier (5) du moteur, du premier couple de branches (21; 22) de la partie formant collier de fixation, et peut être serti sous la forme d'un clip sur le conducteur d'alimentation (conducteur négatif 3).
